(19) Europäisches Patentamt
European Patent Office
Office européen des brevets

(11) **EP 4 484 231 B1**

(12) **EUROPÄISCHE PATENTSCHRIFT**

(45) Veröffentlichungstag und Bekanntmachung des Hinweises auf die Patenterteilung:
**25.03.2026 Patentblatt 2026/13**

(21) Anmeldenummer: **24179016.1**

(22) Anmeldetag: **30.05.2024**

(51) Internationale Patentklassifikation (IPC):
**B60T 7/20** (2006.01) **B60T 8/17** (2006.01)
**B60T 13/08** (2006.01) **B60T 13/26** (2006.01)

(52) Gemeinsame Patentklassifikation (CPC):
**B60T 13/08; B60T 7/20; B60T 8/1708; B60T 13/265**

(54) **VERFAHREN ZUR AUTARKEN STEUERUNG EINER BREMSANLAGE EINES ANHÄNGERFAHRZEUGES EINES SATTELZUGES**

METHOD FOR THE AUTONOMOUS CONTROL OF A BRAKING SYSTEM OF A TRAILER VEHICLE OF A SEMI-TRAILER

PROCÉDÉ DE COMMANDE AUTONOME D'UN SYSTÈME DE FREINAGE D'UN VÉHICULE TRACTÉ D'UN SEMI-REMORQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **29.06.2023 DE 102023117135**

(43) Veröffentlichungstag der Anmeldung:
**01.01.2025 Patentblatt 2025/01**

(73) Patentinhaber: **ZF CV Systems Global GmbH
3006 Bern (CH)**

(72) Erfinder:
• **STENDER, Axel
31787 Hameln (DE)**
• **WITTE, Norbert
31867 Lauenau (DE)**

(74) Vertreter: **Ohlendorf, Henrike
ZF CV Systems Hannover GmbH
Am Lindener Hafen 21
30453 Hannover (DE)**

(56) Entgegenhaltungen:
EP-B1- 0 575 936     DE-A1- 19 812 719
DE-A1- 4 212 161     DE-A1- 4 243 245
US-A1- 2024 068 894

**Beschreibung**

Die Erfindung betrifft ein Verfahren zur autarken Steuerung einer Bremsanlage eines Anhängerfahrzeuges eines Sattelzuges.

Aus der EP 575 936 B1 ist ein Verfahren zur elektronischen Koppelkraftregelung bei mehrteiligen Fahrzeugen bekannt, bei welchem eine Kraft zwischen Zugfahrzeug und Anhängerfahrzeug in Fahrtrichtung in einer Sattelkupplung gemessen und daraus eine Querkraftkomponente zwischen Zugfahrzeug und Anhängerfahrzeug ermittelt wird. An der Sattelkupplung ist ein Druckkraftsensor zur Ermittlung dieser Kraft in Längsrichtung angeordnet. Die Druckkraft ist ein Indiz dafür, dass das Anhängerfahrzeug auf das Zugfahrzeug auffährt und abgebremst werden muss. Aus den so bestimmten Kräften wird die Bremsanforderung im Zugfahrzeug für das Anhängerfahrzeug ermittelt.

Aus der DE 42 12 161 A1 ist ein Sattelauflieger bekannt, an dem aufgrund einer Schiebelast zwischen einem Königszapfen des Sattelaufliegers und einer Halterung des Königszapfens auftretende Belastungen abgegriffen und zum Steuern einer Bremsvorrichtung des Sattelaufliegers verwendet werden.

Es ist Aufgabe der Erfindung, ein Verfahren zur autarken Steuerung einer Bremsanlage eines Anhängerfahrzeuges eines Sattelzuges anzugeben, mit welchem eine redundante Ansteuerung einer Betriebsbremse des Anhängerfahrzeuges realisiert werden kann.

Diese Aufgabe wird durch ein Verfahren zur autarken Steuerung einer Bremsanlage eines Anhängerfahrzeuges eines Sattelzuges gelöst, bei welchem eine an einem Königszapfen angreifende Kraft des Anhängerfahrzeuges bestimmt wird. In Abhängigkeit von der an dem Königszapfen angreifenden Kraft wird ein Bremssignal zur Einstellung einer Bremskraft im Anhängerfahrzeug ermittelt, wobei die Bremskraft so eingestellt wird, dass eine resultierende Abbremsung des Anhängerfahrzeuges einem Quotienten aus der an dem Königszapfen angreifenden horizontalen Kraft und einer Stützlast entspricht, die an einer Sattelplatte einer Sattelkupplung angreifen.

Durch die Auswertung der am Anhängerfahrzeug einzustellenden Kräfte wird die Bremskraft für das Anhängerfahrzeug unabhängig von dem Zugfahrzeug berechnet und ermöglicht somit eine autarke Ansteuerung der Bremsanlage des Anhängerfahrzeuges. Dies verhindert Gefahrensituationen, wenn elektrische und/oder pneumatische Steuerleitungen, die das Zugfahrzeug mit dem Anhängerfahrzeug verbinden, ausfallen oder unterbrochen werden. Das Anhängerfahrzeug ist jederzeit in der Lage, eigenständig ohne eine Installation von zusätzlichen elektrischen und/oder pneumatischen Steuerleitungen zwischen Zugfahrzeug und Anhängerfahrzeug abzubremsen. Auch im Fall von Fahrzeugsystemen, bei welchen die Bremsanforderung drahtlos, beispielsweise über Funk, vom Zugfahrzeug an das Anhängerfahrzeug übertragen wird, ist das Anhängerfahrzeug beim Ausfall oder einer Störung der drahtlosen Kommunikation jederzeit abbremsbar.

Auch bei autonom fahrenden Fahrzeugkombination können die Anhängerfahrzeuge entsprechend ausgerüstet sein, um diese bei jeglichen Ausfällen und Problemen der Fahrzeugkombination sicher im öffentlichen Straßenverkehr betreiben zu können.

Jede Achse des Anhängerfahrzeuges bremst dabei die auf ihr aufliegende Masse ab. Das bedeutet, dass der berechnete Quotient aus Bremskraft und Achslast an allen Achsen gleich ist, auch an der Sattelplatte des Zugfahrzeuges. Beim Bremsen der Fahrzeugkombination wird also der Teil der Masse des Anhängerfahrzeuges, der auf der Sattelplatte aufliegt, von Zugfahrzeug mitgebremst. Um diesen Teil zu bestimmen, wird die horizontale Kraft zwischen Zugfahrzeug und Anhängerfahrzeug der Fahrzeugkombination gemessen, aus welcher der Anteil einer Masse des Anhängerfahrzeuges bestimmt wird, der durch das Zugfahrzeug und nicht von dem Anhängerfahrzeug gebremst wird.

In einer bevorzugten Ausführung wird die statische Stützlast, welche eine vertikale Kraft darstellt, an der Sattelplatte aus einer Gesamtmasse des Zugfahrzeuges abzüglich einer Achslast des Anhängerfahrzeuges bestimmt. Zur Verbesserung der Genauigkeit der gemessenen Stützlast wird diese in Abhängigkeit eines Rollwiderstands und/oder einer etwaigen Hangabtriebskraft reduziert oder erhöht. Die Berechnung erfolgt kontinuierlich während einer Beschleunigung des Anhängerfahrzeuges und wird zur Verwendung bei einem Bremsvorgang abgespeichert.

In einer weiteren bevorzugten Ausführung wird der Quotient aus horizontaler Kraft und Stützlast bei einem Abbremsen des Zugfahrzeuges berechnet und in Abhängigkeit des aktuell ermittelten Quotienten als Bremssignal eine Sollverzögerung mit der Bremsanlage aufgebaut, welche anhand eines Vergleichs des aktuell ermittelten Quotienten mit einem Schwellwert bestimmt wird. Diese Sollverzögerung stellt dabei ein valides Bremssignal dar, mit welchem das Anhängerfahrzeug sich selbsttätig abbremsen kann. Zur genauen Generierung des Bremssignals wird die Sollverzögerung des Anhängerfahrzeuges reduziert, wenn der aktuell ermittelte Quotient kleiner als der Schwellwert ist. Die Sollverzögerung des Anhängerfahrzeuges wird erhöht, wenn der aktuell ermittelte Quotient größer als der Schwellwert ist. Das Reduzieren und/oder Erhöhen der Sollverzögerung kann um einen prozentualen Wert erfolgen, beispielsweise um einen Wert aus dem Bereich zwischen 0,5 % und 2 %, insbesondere um einen Wert aus dem Bereich zwischen 0,7 % und 1,3 %, insbesondere um 1 % oder um 2 %. Wenn der aktuell ermittelte Quotient dem Sollwert entspricht, wird das Anhängerfahrzeug optimal abgebremst.

In einer alternativen bevorzugten Ausführung wird ein in der Bremsanlage des Anhängerfahrzeuges erzeugter Bremsdruck gemäß der aktuellen Sollverzögerung angesteuert und während des Bremsvorganges des Anhängerfahrzeuges entsprechend dem aktuell ermittelten Quotienten in einem Toleranzband korrigiert. Die Breite des Toleranzbandes kann dabei in Abhängigkeit von der Beladung des Anhängerfahrzeuges bestimmt werden.

Ein weiterer Aspekt der Erfindung betrifft ein Steuergerät einer Bremsanlage eines Anhängerfahrzeuges einer Fahrzeugkombination, welches ausgebildet ist, mindestens ein Merkmal des im Vorhergehenden und Folgenden beschriebenen Verfahrens auszuführen. Die im Zusammenhang mit dem offenbarten Verfahren beschriebenen Merkmale treffen gleichermaßen auf das Steuergerät zu, welches das Verfahren ausführt. Dies kann unter Vornahme geeigneter Schreib- und Lesezugriffe auf einen dem Anhängerfahrzeug zugeordneten Speicher erfolgen. Das Verfahren ist im Steuergerät insbesondere innerhalb des Anhängerfahrzeuges in Hardware und Software oder auch einer Kombination aus Hardware und Software implementiert. Die Hardware umfasst insbesondere digitale Signalprozessoren, anwendungsspezifische integrierte Schaltkreise, Field Programmable Gate Arrays sowie weitere geeignete Schalt- und Rechenkomponenten.

Weitere Merkmale, Vorteile und Eigenschaften der Erfindung werden anhand der Beschreibung bevorzugter Ausführungen der Erfindung unter Verweis auf die Figuren erklärt, die zeigen:

Fig. 1 ein Ausführungsbeispiel einer autarken Bremsanlage eines Anhängerfahrzeuges eines Sattelzuges,

Fig. 2 ein Ausführungsbeispiel eines Sattelzuges mit Darstellung der angreifenden Kräfte,

Fig. 3 ein Ausführungsbeispiel eines Königszapfens des Anhängerfahrzeugs mit Darstellung der angreifenden Kräfte,

Fig. 4 ein Ablaufdiagramm eines Ausführungsbeispiels des erfindungsgemäßen Verfahrens,

Fig. 5 eine graphische Darstellung eines Bremsdrucks mit einem Toleranzband in einem Ausführungsbeispiel des erfindungsgemäßen Verfahrens.

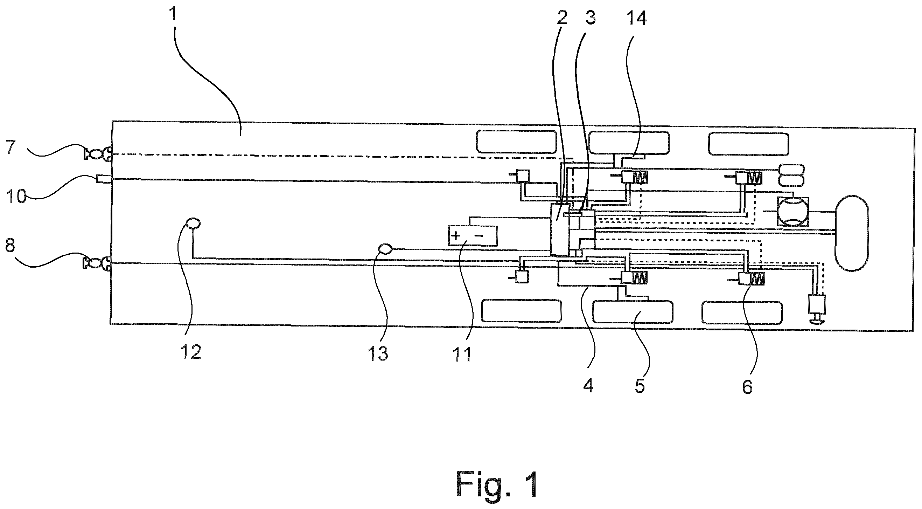

In Fig. 1 ist ein Ausführungsbeispiel einer autarken Bremsanlage eines Anhängerfahrzeuges 1 eines Sattelzuges 202 dargestellt. Das zentrale Element der autarken Bremsanlage des Anhängerfahrzeuges 1 ist durch ein Steuergerät 2 gebildet, welches einen elektronischen Brems-Modulator 3 zur Abgabe von Bremssignalen 4 zur pneumatischen Ansteuerung der Fahrzeugräder 5 über jeweils einen Bremsaktor 6 ansteuert. Dazu ist der Bremsaktor 6 mit einem pneumatischen Steuerdruckanschluss 7 und einem Versorgungsdruckanschluss 8 eines Zugfahrzeuges 9 des Sattelzuges 202 gekoppelt. Das Steuergerät 2 ist mit einer elektrischen Spannungsversorgung 10 für die elektrische Bremsleitung mit dem Zugfahrzeug 9 verbunden und wird redundant von einer Batterie 11 des Anhängerfahrzeuges 1 mit Energie versorgt. Darüber hinaus führt ein Koppelkraftsensor 12 zum Messen der horizontalen Kräfte zwischen dem Zugfahrzeug 9 und dem Anhängerfahrzeug 1 an das Steuergerät 2. Ein Neigungssensor 13 zur Ermittlung eines Neigungswinkels β einer Straße, auf der das Anhängerfahrzeug fährt, und ein ABS-Sensor 14 zum Messen einer Radgeschwindigkeit sind ebenfalls mit dem Steuergerät 2 verbunden. Aus den erfassten Sensorsignalen berechnet der Brems-Modulator 6 die für eine Bremsung notwendigen Bremsdrücke.

Mit der Batterie 11 und der von dem Zugfahrzeug 9 bereitgestellten elektrischen Spannungsversorgung 10 umfasst das Anhängerfahrzeug 1 eine redundante Energieversorgung. Bei einer Störung der vom Zugfahrzeug 9 gelieferten Spannungsversorgung 10 berechnet das Steuergerät 2, welches weiterhin von der Batterie 11 mit Energie versorgt wird, den notwendigen, auf die Fahrzeugräder 5 des Anhängerfahrzeuges 1 angreifenden Bremsdruck aus den am Zugfahrzeug 9 und am Anhängerfahrzeug 1 angreifenden Kräften. Dabei liegt der Bremsung des mit dem Zugfahrzeug 9 und dem Anhängerfahrzeug 1 gebildeten Sattelzuges 202 das Ziel zugrunde, dass jede Achse des Sattelzuges 202 die darauf liegende Masse abbremst. Das bedeutet, dass ein Quotient aus Bremskraft und Achslast an allen Achsen gleich ist. Das trifft auch auf eine Sattelplatte 15 des Zugfahrzeuges 9 zu, in welche ein Königszapfen 16 des Anhängerfahrzeuges 1 zu dessen Ankopplung an das Zugfahrzeug 9 eingreift. Beim Bremsen wird also der Teil der Masse des Anhängerfahrzeuges 1, der auf der Sattelplatte 15 des Zugfahrzeuges 9 aufliegt, vom Zugfahrzeug 9 mitgebremst.

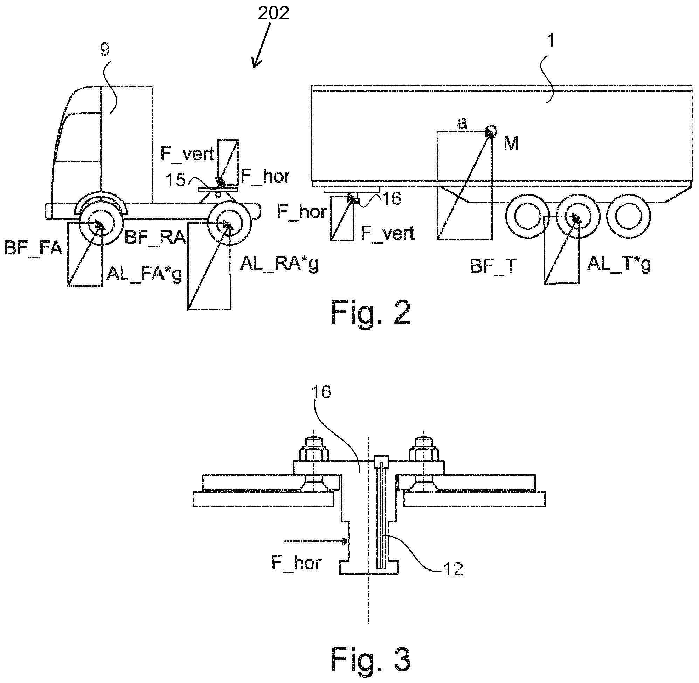

In Fig. 2 sind die an dem Sattelzug 202 angreifenden Kräfte und weitere Parameter dargestellt.

BF_FA    Bremskraft der Frontachse des Zugfahrzeuges 1,

AL_FA    Achslast der Frontachse,

BF_RA    Bremskraft der Hinterachse des Zugfahrzeuges 1,

AL_RA    Achslast der Hinterachse,

BF_T    Bremskraft für jede Achse des Anhängerfahrzeuges 1,

AL_T    Achslast für alle drei Achsen des Anhängerfahrzeuges 1,

F_vert    Stützlast (vertikale Kraft) des Anhängerfahrzeuges 1,

F_hor    horizontale Kraft am Königszapfen des Anhängerfahrzeuges 1,

a    Längsbeschleunigung,

g    Erdbeschleunigung,

M    Gesamtmasse des Anhängerfahrzeuges 1.

Die vom Anhängerfahrzeug 1 aufgebrachte Kraft ergibt sich aus

$$M \cdot g = AL\_T \cdot g + F\_vert.$$

Gemäß Fig. 3, welche ein Ausführungsbeispiel eines Königszapfens 16 des Anhängerfahrzeugs 1 mit angreifenden Kräften zeigt, ist der Koppelkraftsensor 12 zur Messung der horizontalen Kraft F_hor zwischen der Sattelplatte 15 des Zugfahrzeuges 9 und dem Königszapfen 16 des Anhängerfahrzeuges 1 angeordnet. Mit diesem Koppelkraftsensor 12 wird die Kraft zwischen Zugfahrzeug 9 und Anhängerfahrzeug 1 gemessen, wenn das Zugfahrzeug 9 das Anhängerfahrzeug 1 beschleunigt, oder es wird die Kraft bestimmt, mit der das Zugfahrzeug 9 den Lastanteil auf der Sattelplatte 16 abbremst.

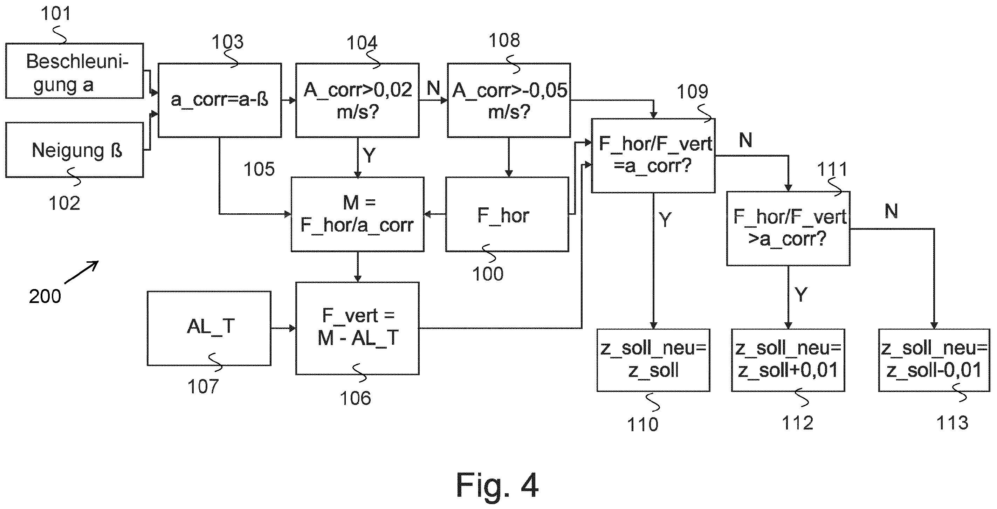

In Fig. 4 ist ein Ausführungsbeispiel des erfindungsgemäßen Verfahrens 200 dargestellt, welches in dem Steuergerät 2 als Softwareprogramm abgespeichert ist. Zunächst wird die Stützlast F_vert der Sattelplatte 15 des Zugfahrzeuges 9 ermittelt. Dazu wird die Kraft, mit der das Anhängerfahrzeug 1 durch das Zugfahrzeug 9 beim Beschleunigen gezogen wird, genutzt, um die Gesamtmasse M des Anhängerfahrzeuges 1 zu bestimmen. Dieses Messsignal wird gefiltert, um Störungen zu vermeiden.

Zu Beginn des Verfahrens 200 wird im Block 100 die horizontale Kraft F_hor am Königszapfen 16 gemessen. Anschließend fährt das Zugfahrzeug 9 an und beschleunigt das Anhängerfahrzeug 1. Im Block 101 wird aus den von den ABS-Sensoren 14 bestimmten Raddrehzahlen von dem Steuergerät 2 die Längsbeschleunigung a des Anhängerfahrzeuges 1 errechnet. Im Block 102 bestimmt der Neigungssensor 13 einen Neigungswinkel β der Straße. Aus beiden Eingangssignalen wird eine korrigierte Beschleunigung a_corr ermittelt (Block 103). Anschließend wird im Block 104 überprüft ob, die korrigierte Beschleunigung a_corr eine Mindestgeschwindigkeit, beispielsweise eine Mindestgeschwindigkeit von 0,02 m/s, übersteigt oder zumindest erreicht. Ist dies der Fall, wird im Block 105 die Gesamtmasse M des Anhängerfahrzeuges 1 berechnet, wobei ein Quotient aus der gemessenen horizontalen Kraft F_hor und der im Block 102 bestimmten korrigierten Beschleunigung a_corr gebildet wird. Im sich anschließenden Block 106 wird die Stützlast F_vert aus der Differenz der Gesamtmasse M des Anhängerfahrzeuges 1 und der im Block 107 bestimmten Achslast AL_T des Anhängerfahrzeuges 1 berechnet. Die Achslast AL_T des Anhängerfahrzeuges 1 wird mit einem Achslastsensor ermittelt. Der Wert der Stützlast F_vert wird kontinuierlich während der Beschleunigung des Anhängerfahrzeuges 1 ermittelt und durch eine entsprechende Filterung in seiner Genauigkeit verfeinert. Der so ermittelte Wert der Kraft F_vert wird zur Verwendung beim nächsten Bremsvorgang abgespeichert.

Wird bei bremsender Fahrzeugkombination im Block 104 festgestellt, dass die mit Hilfe der korrigierte Beschleunigung a_corr berechnete Geschwindigkeit A_corr kleiner ist als die Mindestgeschwindigkeit, beispielsweise die Mindestgeschwindigkeit von 0,02 m/s, wird zum Block 108 übergegangen, wo geprüft wird, ob die korrigierte Geschwindigkeit A_corr kleiner ist als beispielsweise -0,05 m/s. Ist dies der Fall, wird überprüft, ob ein Quotient aus der in Block 100 gemessenen horizontalen Kraft F_hor und der im Block 106 berechneten Stützlast F_vert annähernd der im Block 103 bestimmten korrigierten Beschleunigung a_corr entspricht (Block 109). Ist dies der Fall, wird im Block 110 eine neue Sollverzögerung z_soll_neu bestimmt, die einer vorgegebenen Sollverzögerung z_soll entspricht, wobei das Anhängerfahrzeug 1 optimal abgebremst wird.

Weicht der Quotient (Block 109) aus der in Block 100 gemessenen horizontalen Kraft F_hor und der im Block 106 berechneten Stützlast F von der korrigierten Beschleunigung a_corr ab, wird zum Block 111 übergegangen, wo geprüft wird, ob der Quotient aus horizontaler Kraft F_hor und der Stützlast F_vert größer als die korrigierte Beschleunigung a_corr ist. Wenn ja, wird im Block 112 die Sollverzögerung z_soll des Anhängerfahrzeuges 1 um einen prozentualen Wert erhöht und entspricht beispielsweise, bei einer Erhöhung um 1 %, z_soll_neu = z_soll + 0,01. Ist der aus der in Block 100 gemessenen horizontalen Kraft F_hor und der im Block 106 berechneten Stützlast F_vert berechnete Quotient kleiner als die korrigierte Beschleunigung a_corr, wird die Sollverzögerung Z_soll im Anhängerfahrzeug 1 um einen prozentualen Wert reduziert und entspricht beispielsweise, bei einer Reduktion um 1 %, z_soll_neu = z_soll - 0,01. Insbesondere kann die prozentuale Erhöhung und/oder Reduktion um einen Wert aus dem Bereich zwischen 0,5 % und 2 % erfolgen, insbesondere um einen Wert aus dem Bereich zwischen 0,7 % und 1,3 %, insbesondere um 1 % oder um 2 %. In den Bremsaktuatoren 6 wird ein pneumatischer Druck eingestellt, mittels welchem die jeweils berechnete neue Sollverzögerung z_soll_neu am Anhängerfahrzeug eingestellt werden kann.

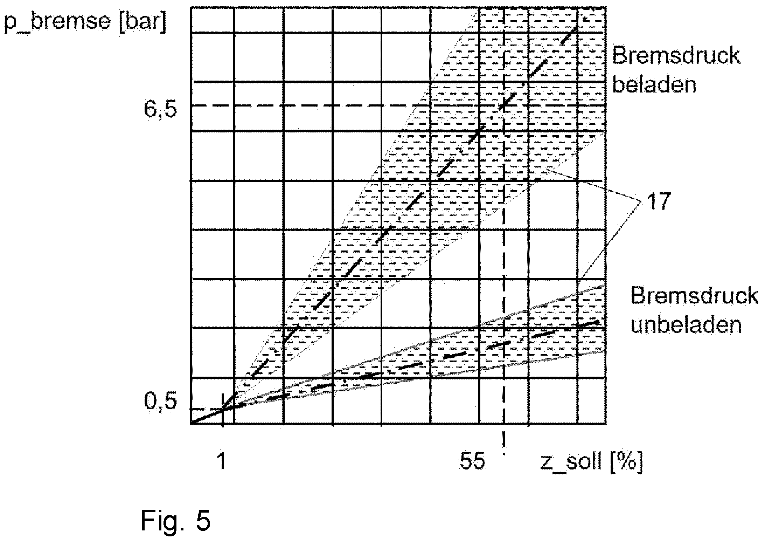

Alternativ zu den Berechnungen der neuen Sollverzögerung z_soll_neu kann ein Bremsdruck p_bremse entsprechend der aktuell bestimmten Verzögerung z_soll ausgesteuert werden, der dann während der Bremsung entsprechend des Quotienten F_hor/F_vert an der Sattelplatte 15 in einem Toleranzband 17, wie es in Fig. 5 dargestellt ist, korrigiert werden kann.

Die beschriebene Lösung beschreibt somit ein Verfahren zur Steuerung des Bremssystems eines Anhängerfahrzeuges 1, bei welchem die Horizontalkraft F_hor zwischen Zugfahrzeug 9 und Anhängerfahrzeug 1 gemessen und daraus ein Anteil der Masse des Anhängerfahrzeuges ermittelt wird, der durch das Zugfahrzeug 9 gebremst wird, und die Bremskraft am Anhängerfahrzeug 1 so eingestellt wird, dass an der Sattelplatte 15 des Zugfahrzeuges 9 der Quotient aus F_hor und Stützlast F_vert der aktuellen Abbremsung z_soll des Anhängerfahrzeuges 1 entspricht.

Bezugszeichen (Teil der Beschreibung)

| 1 | Anhängerfahrzeug |
|---|---|
| 2 | Steuergerät |
| 3 | Brems-Modulator |
| 4 | Bremssignal |
| 5 | Fahrzeugrad |
| 6 | Bremsaktor |
| 7 | Pneumatischer Steuerdruckanschluss |
| 8 | Versorgungsdruckanschluss |
| 9 | Zugfahrzeug |
| 10 | Elektrische Spannungsversorgung vom Zugfahrzeug |
| 11 | Batterie des Anhängerfahrzeuges |
| 12 | Koppelkraftsensor |
| 13 | Neigungssensor |
| 14 | ABS-Sensor |
| 15 | Sattelplatte |
| 16 | Königszapfen |
| 17 | Toleranzband |
| 100 | Block |
| 101 | Block |
| 102 | Block |
| 103 | Block |
| 104 | Block |
| 105 | Block |
| 106 | Block |
| 107 | Block |
| 108 | Block |
| 109 | Block |
| 110 | Block |
| 111 | Block |
| 112 | Block |
| 113 | Block |
| 200 | Verfahren |
| 202 | Fahrzeugkombination |
| BF_FA | Bremskraft der Frontachse des Zugfahrzeuges |
| AL_FA | Achslast der Frontachse |
| BF_RA | Bremskraft der Hinterachse des Zugfahrzeuges |
| AL_RA | Achslast der Hinterachse |
| BF_T | Bremskraft für alle drei Achsen des Anhängerfahrzeuges |
| AL_T | Achslast für alle drei Achsen des Anhängerfahrzeuges |
| F_vert | Stützlast (vertikale Last) des Anhängerfahrzeuges |
| F_hor | horizontale Kraft am Königszapfen des Anhängerfahrzeuges |
| a | Längsbeschleunigung |
| g | Erdbeschleunigung |
| M | Gesamtmasse des Anhängerfahrzeuges |
| z_soll_neu | aktuell bestimmte Sollverzögerung |
| z_soll | vorgegebene Sollverzögerung |
| p_bremse | Bremsdruck |
| β | Neigung der Straße |

**Patentansprüche**

1. Verfahren (200) zur autarken Steuerung einer Bremsanlage eines Anhängerfahrzeuges (1) eines Sattelzuges (202), bei welchem eine an einem Königszapfen (16) angreifende Kraft (F_hor) des Anhängerfahrzeuges (1) bestimmt wird, in deren Abhängigkeit ein Bremssignal (14) zur Einstellung einer Bremskraft (BF_T) im Anhängerfahrzeug (1) ermittelt wird, **dadurch gekennzeichnet, dass** die Bremskraft (BF_T) im Anhängerfahrzeug (1) so eingestellt wird, dass eine aus der Bremskraft (BF_T) resultierende Abbremsung des Anhängerfahrzeuges (1) einem Quotienten aus der an dem Königszapfen (16) angreifenden horizontalen Kraft (F_hor) und einer Stützlast (F_vert) entspricht, die an einer Sattelplatte (15) einer Sattelkupplung angreifen.

2. Verfahren (200) nach Anspruch 1, **dadurch gekennzeichnet, dass** die horizontale Kraft (F_hor) zwischen Zugfahrzeug (9) und Anhängerfahrzeug (1) des Sattelzuges (202) gemessen wird, aus welcher ein Anteil einer Masse (M) des Anhängerfahrzeuges (1) bestimmt wird, der durch das Zugfahrzeug (9) gebremst wird.

3. Verfahren (200) nach Anspruch 2, **dadurch gekennzeichnet, dass** die gemessene horizontale Kraft (F_hor) in Abhängigkeit eines Rollwiderstandes und/oder einer Hangabtriebskraft korrigiert wird.

4. Verfahren (200) nach Anspruch 1, 2 oder 3, **dadurch gekennzeichnet, dass** die eine vertikale Kraft darstellende Stützlast (F_vert) aus einer Gesamtmasse des oder eines Zugfahrzeuges (9) des Sattelzuges (202) abzüglich einer Achslast (AL_T) des Anhängerfahrzeuges (1) bestimmt wird.

5. Verfahren (200) nach mindestens einem der vorhergehenden Ansprüche, **dadurch gekennzeichnet, dass** die eine vertikale Kraft darstellende Stützlast (F_vert) kontinuierlich während einer Beschleunigung (a) des Anhängerfahrzeuges (1) berechnet wird und zur Verwendung bei einem Bremsvorgang abgespeichert wird.

6. Verfahren (200) nach mindestens einem der vorhergehenden Ansprüche, **dadurch gekennzeichnet, dass** der Quotient aus horizontaler Kraft (F_hor) und Stützlast (F_vert) bei einem Abbremsen des Zugfahrzeuges (9) berechnet wird und in Abhängigkeit des aktuell ermittelten Quotienten (F_hor/F_vert) als Bremssignal eine Sollverzögerung (z_soll) mit der Bremsanlage aufgebaut wird, welche anhand eines Vergleichs des aktuell ermittelten Quotienten (F_hor/F_vert) mit einem Schwellwert (a_corr) bestimmt wird.

7. Verfahren (200) nach Anspruch 6, **dadurch gekennzeichnet, dass** die Sollverzögerung (z_soll) des Anhängerfahrzeuges (1) reduziert wird, wenn der aktuell ermittelte Quotient (F_hor/F_vert) kleiner als der Schwellwert (a_corr) ist.

8. Verfahren (200) nach Anspruch 6, **dadurch gekennzeichnet, dass** die Sollverzögerung des Anhängerfahrzeuges erhöht wird, wenn der aktuell ermittelte Quotient (F_hor/F_vert) größer als der Schwellwert (a_corr) ist.

9. Verfahren (200) nach Anspruch 6, **dadurch gekennzeichnet, dass** das Anhängerfahrzeug (1) optimal abgebremst wird, wenn der aktuell ermittelte Quotient (F_hor / F_vert) dem Schwellwert (a_corr) entspricht.

10. Verfahren (200) nach mindestens einem der vorhergehenden Ansprüche 1 bis 5, **dadurch gekennzeichnet, dass** ein in der Bremsanlage des Anhängerfahrzeuges (1) erzeugter Bremsdruck (p_bremse) gemäß der aktuell bestimmten Sollverzögerung (Z_soll_neu) angesteuert und während des Bremsvorganges des Anhängerfahrzeuges (1) entsprechend dem aktuell ermittelten Quotienten (F_hor/F_vert) in einem Toleranzband (17) korrigiert wird.

**Claims**

1. Method (200) for autonomously controlling a braking system of a trailer vehicle (1) of a semi-trailer truck (202), in which a force (F_hor) acting on a kingpin (16) which is exerted by the trailer vehicle (1) is determined, on the basis of which a braking signal (14) for setting a braking force (BF_T) in the trailer vehicle (1) is ascertained, **characterized in that** the braking force (BF_T) in the trailer vehicle (1) is set such that a deceleration of the trailer vehicle (1) resulting from the braking force (BF_T) corresponds to a quotient of the horizontal force (F_hor) acting on the kingpin (16) and a bearing load (F_vert) which act on a fifth-wheel plate (15) of a fifth-wheel coupling.

2. Method (200) according to claim 1, **characterized in that** the horizontal force (F_hor) between the towing vehicle (9) and the trailer vehicle (1) of the semi-trailer truck (202) is measured, from which horizontal force a proportion, braked by the towing vehicle (9), of a mass (M) of the trailer vehicle (1) is determined.

3. Method (200) according to claim 2, **characterized in that** the measured horizontal force (F_hor) is corrected on the basis of rolling resistance and/or a downslope force.

4. Method (200) according to claim 1, 2 or 3, **characterized in that** the bearing load (F_vert) representing a vertical force is determined from a total mass of the or a towing vehicle (9) of the semi-trailer truck (202) minus an axle load (AL_T) of the trailer vehicle (1).

5. Method (200) according to at least one of the preceding claims, **characterized in that** the bearing load (F_vert) representing a vertical force is continuously calculated during an acceleration (a) of the trailer vehicle (1) and is stored for use in a braking procedure.

6. Method (200) according to at least one of the preceding claims, **characterized in that** the quotient of the horizontal force (F_hor) and the bearing load (F_vert) is calculated when the towing vehicle (9) is decelerating, and a target retardation (z_soll) by means of the braking system is established as the braking signal on the basis of the quotient (F_hor/F_vert) currently being ascertained, which retardation is determined by comparing the quotient (F_hor/F_vert) currently being ascertained to a threshold value (a_corr).

7. Method (200) according to claim 6, **characterized in that** the target retardation (z_soll) of the trailer vehicle (1) is reduced if the quotient (F_hor/F_vert) currently being ascertained is smaller than the threshold value (a_corr).

8. Method (200) according to claim 6, **characterized in that** the target retardation of the trailer vehicle is increased if the quotient (F_hor/F_vert) currently being ascertained is greater than the threshold value (a_corr).

9. Method (200) according to claim 6, **characterized in that** the trailer vehicle (1) is optimally decelerated when the quotient (F_hor/F_vert) currently being ascertained corresponds to the threshold value (a_corr).

**10.** Method (200) according to at least one of the preceding claims 1 to 5, **characterized in that** a brake pressure (p_bremse) generated in the braking system of the trailer vehicle (1) is controlled according to the target retardation (Z_soll_neu) currently being determined and is corrected in a tolerance band (17) during the braking procedure of the trailer vehicle (1) in accordance with the quotient (F_hor/F_vert) currently being ascertained.

**Revendications**

**1.** Procédé (200) permettant la commande autarcique d'une installation de freinage d'un véhicule remorqué (1) d'un semi-remorque (202), dans lequel une force (F_hor) du véhicule remorqué (1) agissant sur un pivot central (16) est déterminée, en fonction de laquelle un signal de freinage (14) est déterminé pour le réglage d'une force de freinage (BF_T) dans le véhicule remorqué (1), **caractérisé en ce que** la force de freinage (BF_T) dans le véhicule remorqué (1) est réglée de sorte qu'un freinage du véhicule remorqué (1) résultant de la force de freinage (BF_T) corresponde à un quotient de la force horizontale (F_hor) agissant sur le pivot central (16) et d'une charge d'appui (F_vert), lesquelles agissent sur une sellette d'attelage (15) d'un attelage.

**2.** Procédé (200) selon la revendication 1, **caractérisé en ce que** la force horizontale (F_hor) entre le véhicule tracteur (9) et le véhicule remorqué (1) du semi-remorque (202) est mesurée, force horizontale à partir de laquelle une fraction d'une masse (M) du véhicule remorqué (1) est déterminée, laquelle est freinée par le véhicule tracteur (9).

**3.** Procédé (200) selon la revendication 2, **caractérisé en ce que** la force horizontale (F_hor) mesurée est corrigée en fonction d'une résistance au roulement et/ou d'une force descensionnelle en pente.

**4.** Procédé (200) selon la revendication 1, 2 ou 3, **caractérisé en ce que** la charge d'appui (F_vert) représentant une force verticale est déterminée à partir d'une masse totale du ou d'un véhicule tracteur (9) du semi-remorque (202) moins une charge d'essieu (AL_T) du véhicule remorqué (1).

**5.** Procédé (200) selon au moins l'une des revendications précédentes, **caractérisé en ce que** la charge d'appui (F_vert) représentant une force verticale est calculée en continu pendant une accélération (a) du véhicule remorqué (1) et est mémorisée pour être utilisée lors d'un processus de freinage.

**6.** Procédé (200) selon au moins l'une des revendications précédentes, **caractérisé en ce que** le quotient de la force horizontale (F_hor) et de la charge d'appui (F_vert) est calculé lors d'un freinage du véhicule tracteur (9) et, en fonction du quotient actuellement déterminé (F_hor/F_vert), une décélération de consigne (z_soll) est établie avec l'installation de freinage comme signal de freinage, laquelle est déterminée à l'aide d'une comparaison du quotient actuellement déterminé (F_hor/F_vert) avec une valeur seuil (a_corr).

**7.** Procédé (200) selon la revendication 6, **caractérisé en ce que** la décélération de consigne (z_soll) du véhicule remorqué (1) est réduite lorsque le quotient actuellement déterminé (F_hor/F_vert) est inférieur à la valeur seuil (a_corr).

**8.** Procédé (200) selon la revendication 6, **caractérisé en ce que** la décélération de consigne du véhicule remorqué est augmentée lorsque le quotient actuellement déterminé (F_hor/F_vert) est supérieur à la valeur seuil (a_corr).

**9.** Procédé (200) selon la revendication 6, **caractérisé en ce que** le véhicule remorqué (1) est freiné de manière optimale lorsque le quotient actuellement déterminé (F_hor/F_vert) correspond à la valeur seuil (a_corr).

**10.** Procédé (200) selon au moins l'une des revendications précédentes 1 à 5, **caractérisé en ce qu'**une pression de freinage (p_bremse) générée dans le système de freinage du véhicule remorqué (1) est commandée conformément à la décélération de consigne actuellement déterminée (Z_soll_neu) et est corrigée pendant le processus de freinage du véhicule remorqué (1) conformément au quotient actuellement déterminé (F_hor/F_vert) dans une bande de tolérance (17).

Fig. 1

EP 4 484 231 B1

Fig. 2

Fig. 3

EP 4 484 231 B1

Fig. 4

Fig. 5

EP 4 484 231 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 575936 B1
- DE 4212161 A1